# EUROPÄISCHE PATENTSCHRIFT

(11) **EP 0 685 148 B1**
(45) Veröffentlichungstag und Bekanntmachung des Hinweises auf die Patenterteilung: **26.07.2000**
(21) Anmeldenummer: 95105969.0
(22) Anmeldetag: 21.04.1995
(51) Int. Cl.: A01D 43/00, A01D 43/06

(54) **Mäh- und/oder Vertikutiermaschine**
Mowing and/or aerating machine
Machine à faucher et/ou à aérer

(30) Priorität: 30.05.1994 DE 4418859; 30.05.1994 DE 4418860
(43) Veröffentlichungstag der Anmeldung: 06.12.1995
(73) Patentinhaber: Amazone Machines Agricoles S.A., F-57602 Forbach (FR)
(72) Erfinder: Schomäker, Wilfried, D-26160 Bad Zwischenahn (DE); Klein, Laurent, F-57350 Spicheren (FR); Pfisterer, Thomas, D-66386 St. Ingbert (DE)

(56) Entgegenhaltungen:
- DE-C- 3 544 166
- DE-U- 8 806 906
- FR-A- 2 352 485
- FR-A- 2 514 987
- FR-A- 2 627 051
- GB-A- 2 092 086
- US-A- 3 641 754
- US-A- 4 986 062

## Beschreibung

Die Erfindung betrifft eine Mäh- und/oder Vertikutiermaschine gemäß des Oberbegriffes des Patentanspruches 1.

Eine derartige Maschine ist durch das französische Patent 25 14 987 bekannt. Diese Maschine weist eine Mäh- und Vertikutiereinrichtung auf, die mittels eines unteren Lenkerpaares und zumindest eines weiteren oberen Lenkers, der ebenfalls als Lenkerpaar ausgebildet ist, am Rahmen der Maschine in Höhenrichtung bewegbar angeordnet ist. Die Lenker der Lenkerpaare sind als Parallelogramm ausgebildet, so daß die Förderschnecke, die das abgemähte Gut einem Sammelbehälter zufördert, in senkrechter Richtung nach oben bewegt wird.

Der Erfindung liegt die Aufgabe zugrunde, die Anlenkung der Mäh- und Vertikutiereinrichtung am Rahmen der Maschine zu vereinfachen.

Diese Aufgabe wird dadurch gelöst, daß der zusätzliche Lenker von dem Förderrohr der Förderschnecke gebildet wird. Hierdurch kann im Vergleich zu der bekannten Maschine das obere Lenkerpaar entfallen, weil dieses durch das Förderrohr ersetzt wird. Hierdurch baut die Maschine einfacher und es ist auf überraschend einfache Weise gelungen, eine exakte Führung des Förderrohres gegenüber dem Sammelbehälter zu erreichen. Gleichzeitig wird eine sichere Aufhängung des Mähwerkes und dessen Führung gegenüber dem Rahmen der Maschine erreicht.

In vorteilhafter Weise ist das Förderrohr der Förderschnecke in Längsrichtung der Förderschnecke verschiebbar gegenüber dem Sammelbehälter mittels einer Schiebeführung am Sammelbehälter geführt. Hierbei hat sich als vorteilhaft herausgestellt, daß das Förderrohr in der Schiebeführung mit allen Freiheitsgraden geführt ist.

Um eine einfache Schnecke vorzuschlagen, die preiswert herzustellen ist und die vorstehenden Nachteile vermeidet, ist vorgesehen, daß an dem oberen Ende der Förderschnecke ein zusätzlicher Schneckenflügel dem Schneckenelement gegenüberliegend angeordnet ist, und daß der Schneckenflügel mindestens über 90 Grad und maximal über 180 Grad verläuft. Infolge dieser Maßnahme wird in überraschend einfacher Weise ein Momentenausgleich geschaffen. Die Schnecke schlägt nicht mehr.

In vorteilhafter Weise ist der zusätzliche Schneckenflügel auf seinem Anfangs- und Endbereich jeweils abgerundet. Hierdurch wird verhindert, daß sich Gut in nachteiliger Weise an dem zusätzlichen Schneckenflügel festsetzt.

In vorteilhafter Weise weist der zusätzliche Schneckenflügel zumindest annähernd die gleiche Steigung wie das Schneckenelement auf. Hierdurch wird ein optimaler Momentenausgleich erzielt.

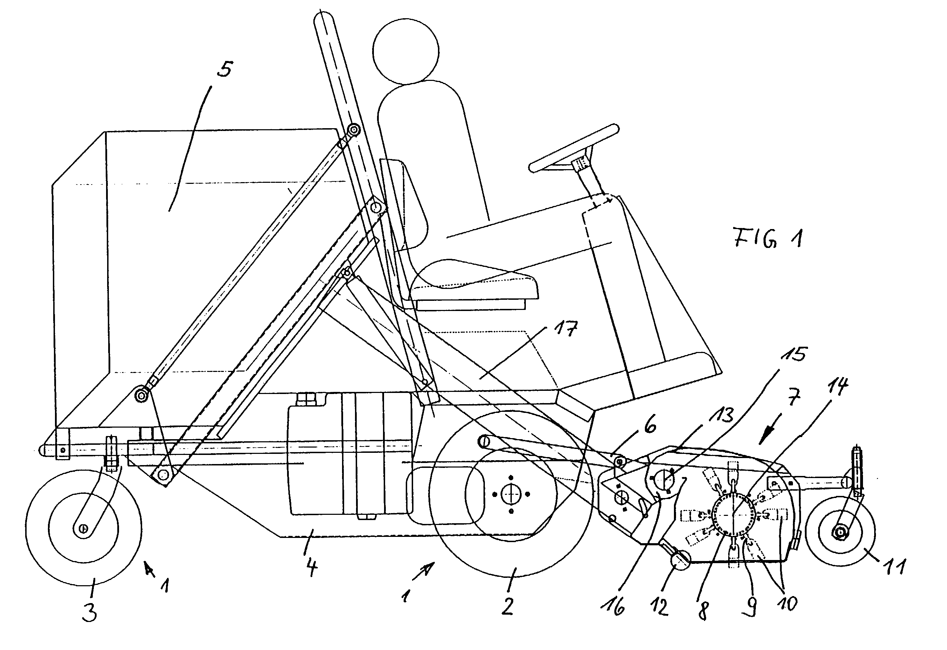

Weitere Einzelheiten der Erfindung sind der Beispielsbeschreibung und den Zeichnungen zu entnehmen. Hierbei zeigen
- Fig. 1: die Mäh- und/oder Vertikutiermaschine in Seitenansicht, und in Prinzipdarstellung,

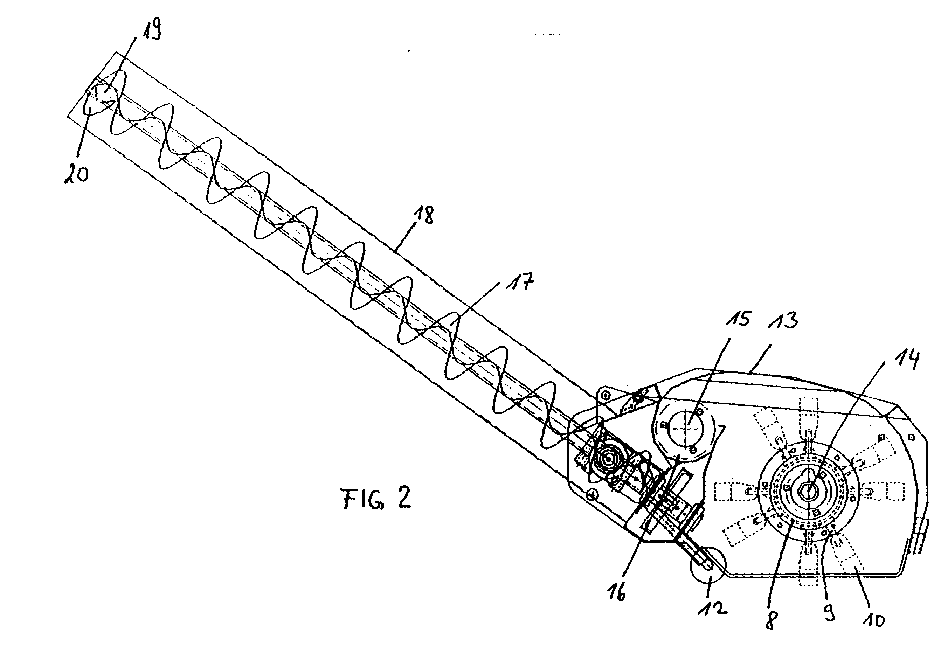

- Fig. 2: die Mäh- und Vertikutiereinrichtung, in Seitenansicht, Prinzipdarstellung und einem anderen Maßstab und

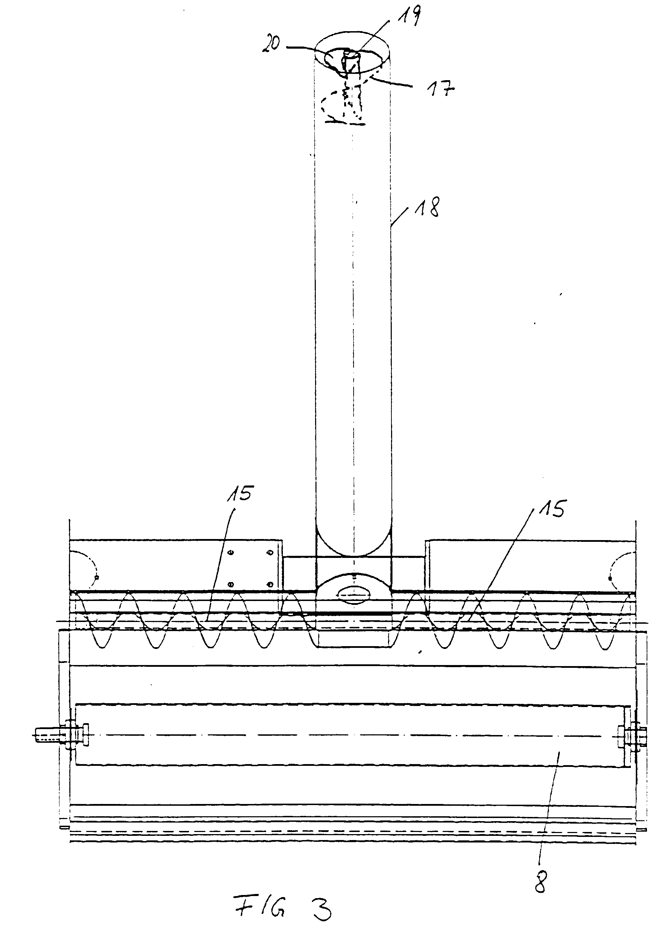

- Fig. 3: die Mäh- und Vertikutiereinrichtung in Prinzipdarstellung und in der Draufsicht.

Die Mäh- und Vertikutiermaschine ist eine vielseitiges Gerät und läßt sich neben dem Mähen von Grünflächen auch als Vertikutier- und Aufsammelgerät einsetzen. Die Maschine weist ein Fahrwerk 1 mit den beiden angetriebenen Vorderrädern 2 und dem hinteren Pendelrad 3 auf. Die Lenkung erfolgt über die angetriebenen Vorderräder 2. An dem Rahmen 4 der Maschine ist auf dessen Rückseite der Sammelbehälter 5 angeordnet. Auf der Vorderseite der Maschine ist über das untere Lenkerpaar 6 die Mäh- und Vertikutiereinrichtung 7 in Höhenrichtung bewegbar angeordnet. Die Mäh- und Vertikutiereinrichtung 7 weist die rotierend angetriebene Mähtrommel 8 auf, an der über Halterungen 9 die Mäh- und Vertikutiermesser 10 befestigt sind. Auf der Vorderseite der Mäh- und Vertikutiereinrichtung 7 befinden sich die in Höhenrichtung einstellbaren und pendelnd angeordneten Laufräder 11, über die in Verbindung mit der hinteren Walze 12, die ebenfalls in Höhenrichtung einstellbar ist, die Mähhöhe und/oder die Vertikutiertiefe eingestellt werden kann. Über eine nicht dargestellte Aushebevorrichtung kann die Mäh- und Vertikutiereinrichtung 7 nach oben in eine Transportstellung angehoben werden.

An dem Gehäuse 13 der Mäh- und Vertikutiereinrichtung 7 ist oberhalb der Drehachse 14 der Mähtrommel und hinter dem Flugkreis der Vertikutiermesser in einer Förderrinne 16 die Querförderschnecke 15 angeordnet, die das von den Mäh- und Vertikutiermessern 10 gemähte und/oder vertikutierte Gut in die Rinne 16 der Querförderschnecke 15 werfen. Die Querförderschnecke 15 fördert das Gut von beiden Seiten zur Mitte der Förderschnecke 17 zu. Diese Förderschnecke 17 ist in einem Förderrohr 18 angeordnet, welches starr an dem Gehäuse 13 der Mäh- und Vertikutiereinrichtung 7 befestigt ist. Dieses Förderrohr 18 bildet den weiteren Lenker für die Mäh- und Vertikutiereinrichtung zur Anlenkung und Führung der Mäh- und Vertikutiereinrichtung 7 gegenüber dem Rahmen 4 der Maschine. Die Förderschnecke 17 ist einseitig am unteren Ende des Förderrohres 18 gelagert und eingängig ausgebildet. Über diese Förderschnecke 17 wird das Gut in den Sammelbehälter 5 gefördert und dort verdichtet.

Am oberen Ende 19 der Förderschnecke 17 ist ein zusätzlicher Schneckenflügel 20 dem eingängigen Schneckenelement gegenüberliegend angeordnet. Dieser zusätzliche Schneckenflügel 20 erstreckt sich über mindestens 90 Grad und maximal über 180 Grad. Der zusätzliche Schneckenflügel 20 ist auf seinem Anfangs- und Endbereich jeweils abgerundet. Der zusätzliche Schneckenflügel 20 weist die gleiche Steigung wie das Schneckenelement auf. Durch dieses zusätzliche Schneckenelement 20 wird erreicht, daß die im Inneren des Förderrohres 18 einseitig gelagerte Förderschnecke 17 an ihrem freien, nicht gelagerten Ende ein ausgleichendes Widerstandsmoment erhält und so an diesem Ende einen zumindest annähernd ruhigen Lauf aufweist. Hierdurch wird also verhindert, daß die Schnecke am äußeren Ende "schlägt". Es erfolgt also ein Momentenausgleich.

## Patentansprüche

1. Mäh- und/oder Vertikutiermaschine mit einer Mäh- und/oder Vertikutiereinrichtung, die das abgeschnittene und/oder aus dem Boden entfernte Gut einem Sammelbehälter über eine Förderschnecke (17) zuführt, wobei die Mäh- und/oder Vertikutiereinrichtung mittels eines unteren Lenkerpaares (6) und eines weiteren Lenkers in Höhenrichtung bewegbar am Rahmen (4) der Mäh- und /oder Vertikutiermaschine (7) angeordnet ist, dadurch gekennzeichnet, daß der zusätzliche Lenker von dem Förderrohr (18) der Förderschnecke (17) gebildet wird.

2. Mäh- und/oder Vertikutiermaschine nach Anspruch 1, dadurch gekennzeichnet, daß das Förderrohr (18) der Förderschnecke (17) in Längsrichtung der Förderschnecke (17) verschiebbar gegenüber dem Sammelbehälter (5) mittels einer Schiebeführung am Sammelbehälter (5) geführt ist.

3. Mäh- und/oder Vertikutiermaschine nach Anspruch 1, dadurch gekennzeichnet, daß das Förderrohr (18) in der Schiebeführung mit allen Freiheitsgraden geführt ist.

4. Mäh- und/oder Vertikutiermaschine nach Anspruch 1, wobei die Förderschnecke einseitig an ihrem unteren Ende gelagert und eingängig ausgebildet ist, an dem oberen Ende (19) der Förderschnecke (17) ein zusätzlicher Schneckenflügel (20) dem Schneckenelement gegenüberliegend angeordnet ist, und der Schneckenflügel (20) mindestens über 90 Grad und maximal über 180 Grad verläuft.

5. Mäh- und/oder Vertikutiermaschine nach Anspruch 4, dadurch gekennzeichnet, daß der zusätzliche Schneckenflügel (20) auf seinem Anfangsbereich und Endbereich jeweils abgerundet ist.

6. Mäh- und/oder Vertikutiermaschine nach Anspruch 4, dadurch gekennzeichnet, daß der zusätzliche Schneckenflügel (20) zumindest annähernd die gleiche Steigung wie das Schneckenelement aufweist.

## Claims

1. Mowing and/or aerating machine, including a mowing and/or aerating arrangement which supplies the material, which has been clipped and/or has been removed from the ground, to a storage tank via a screw conveyor (17), the mowing and/or aerating arrangement being disposed on the frame (4) of the mowing and/or aerating machine (7) so as to be displaceable in the vertical direction by means of a lower pair of guide rods (6) and an additional guide rod, characterised in that the additional guide rod is formed by the conveyor tube (18) of the screw conveyor (17).

2. Mowing and/or aerating machine according to claim 1, characterised in that, when viewed with respect to the longitudinal direction of the screw conveyor (17), the conveyor tube (18) of the screw conveyor (17) is guided on the storage tank (5) by means of a slidable guide so as to be displaceable relative to the storage tank (5).

3. Mowing and/or aerating machine according to claim 1, characterised in that the conveyor tube (18) is guided in the slidable guide in all of the degrees of freedom.

4. Mowing and/or aerating machine according to claim 1, wherein the screw conveyor is unilaterally mounted on its lower end and has a single-thread configuration, an additional screw flight (20) is disposed opposite the screw element on the upper end (19) of the screw conveyor (17), and the screw flight (20) extends at least over 90 degrees and at most over 180 degrees.

5. Mowing and/or aerating machine according to claim 4, characterised in that the additional screw flight (20) is rounded at both its initial region and end region.

6. Mowing and/or aerating machine according to claim 4, characterised in that the additional screw flight (20) has at least approximately the same pitch as the screw element.

## Revendications

1. Machine de fauche et/ou de scarification comprenant une installation de fauche et/ou de scarification qui conduit le produit fauché et/ou enlevé du sol dans un réceptacle par une vis de transfert (17) ; l'installation de fauche et/ou de scarification étant montée par l'intermédiaire d'une paire de bras inférieurs (6), et d'un autre bras, de manière mobile en hauteur sur le châssis (4) de la machine de fauche et/ou de scarification (7),
caractérisée en ce que
le bras supplémentaire est formé par le tube de transfert (18) de la vis transporteuse (17).

2. Machine de fauche et/ou de scarification selon la revendication 1,
caractérisée en ce que
le tube de transfert (18) de la vis de transfert (17) est coulissant dans la direction longitudinale de la vis de transfert (17) par rapport au réceptacle (5) en étant guidé par un guidage coulissant sur le réceptacle (5).

3. Machine de fauche et/ou de scarification selon la revendication 1,
caractérisée en ce que
le tube de transfert (18) est guidé dans le moyen de guidage coulissant avec tous les degrés de liberté.

4. Machine de fauche et/ou de scarification selon la revendication 1, dont la vis transporteuse est montée d'un côté au niveau de son extrémité inférieure et ne comporte qu'un filet, et l'extrémité supérieure (19) de la vis transporteuse (17) comporte une ailette de vis supplémentaire (20) en regard de l'élément de vis et l'ailette (20) s'étend sur au moins 90° à un maximum de 180°.

5. Machine de fauche et/ou de scarification selon la revendication 4,
caractérisée en ce que
l'ailette de vis supplémentaire (20) est chaque fois arrondie dans sa zone initiale et dans sa zone finale.

6. Machine de fauche et/ou de scarification selon la revendication 4,
caractérisée en ce que
l'ailette de vis supplémentaire (20) présente au moins le même pas que l'élément de vis.
